# EUROPEAN PATENT SPECIFICATION

(11) **EP 1 573 288 B1**
(45) Date of publication and mention of the grant of the patent: **16.08.2017**
(21) Application number: 03779753.7
(22) Date of filing: 18.12.2003
(51) Int. Cl.: G01K 17/06

(54) **A METHOD AND A PLANT FOR THE DISTRIBUTION OF COSTS OF HEATING ROOMS**
VERFAHREN UND VORRICHTUNG ZUR VERTEILUNG DER HEIZKOSTEN VON RÄUMEN
PROCEDE ET INSTALLATION DESTINES A REPARTIR LES COUTS DE CHAUFFAGE DE PIECES

(30) Priority: 19.12.2002 DK 200201949
(43) Date of publication of application: 14.09.2005
(73) Proprietor: Brunata International A/S, 2730 Herlev (DK)
(72) Inventor: HANSEN, Jens, Peter, Fischer, DK-2960 Rungsted Kyst (DK)
(74) Representative: Rottenberg, Annabell Simone
(86) International application number: PCT/DK2003/000896
(87) International publication number: WO 2004/057288

(56) References cited:
- EP-A- 0 181 259
- DE-A- 3 201 148
- DE-A- 3 406 309
- DE-A- 4 015 072
- US-A- 3 979 952
- US-A- 4 002 890
- US-A- 4 591 988

## Description

The invention relates to a method of individually distributing the costs of heating rooms in a building, where each room has a consumer. Each consumer may have a number of rooms in the shape of a flat or a consumer unit. Each consumer must pay his/her share of the overall costs.

In principle, there are two different methods according to which the heating costs can be distributed.

The first method used is a measurement system, wherein a so-called comfort value is measured, which in a simplified case is an expression of how hot it is, on average, in the room compared to the average outdoor temperature. This principle is known from "Repartiteurs de frais de chauffage utilisant la mesure de la temperature ambiante des locaux"-June 1983. The reasoning behind the use of comfort measurement is that the individual consumer units have different thermal locations in the property. For instance a gable-end flat on the top floor will have a considerably larger energy consumption than a heat-covered flat centrally in the building. Likewise, a measurement system based on energy measurement will not take into consideration that a flow of heat is generated from a consumer unit with high room temperature to a consumer unit with low room temperature.

The other method consists in measuring the energy consumed for heating by each individual room or several rooms occupied by the same consumer, and subsequently expecting the individual consumer to pay for the amount consumed. This is known ia from WO 97/22863. Compensation for thermally exposed location can be obtained by reducing the occupation number by a certain percentage for the flats having exposed locations.

If, for instance, the distribution of costs is based on how much energy is emitted from the heat source, the consumers will economize on energy, but in return it is possible for some consumers who are very comfortable with a room temperature that is some degrees lower than the average to pay comparatively less, since some heat energy will be received from the surrounding, warmer rooms.

If the distribution of costs is based on calculation of the heat consumption on the basis of the difference between the measured room temperature and the temperature measured outdoors (comfort measurement), the consumers who establish supplementary energy saving measures will not be rewarded accordingly. These energy saving measures may include: extra heat insulation behind radiators, use of curtains that are arranged such that the heat from the radiators is not conveyed upwards to the cold window faces.

If comfort measurement is used as sole basis for distribution of costs it may lead to unreasonable energy consumption. In case of leaky windows or double glazing punctures there is no incentive for having them repaired. In the same manner there is no incentive to shut the windows since open windows yield a reduced heating bill. It has been attempted to solve this problem by coupling the valves of the radiators to the windows to the effect that the valves are closed when the windows are opened. However, no applicable technical solution to this coupling has been found.

DE 40 15 072 discloses an apparatus for measuring the room temperature of each radiator in a room and a temperature measurement for to registering the temperature of a central heating system. Each window of the room has a contact, which closes, if the window is opened, so that a signal generator issues a programmed additional charge to the registered temperature of the room, while the window remains open. The individual consumption of heat is calculated from the temperature measurements as well as the measuring apparatus for the external temperature. The latter is also taken into account for the additional charge incurred by having a window open. The apparatus of DE 40 15 072 does not give any indication on the relationship between the heat consumption of the room and the comfort temperature of the room. Also, the apparatus of DE 40 15 072 does not take into account, if the window is opened during a warm season or a cold season.

It is the object of the invention to provide a method of individually measuring the heat consumption, whereby a fair distribution is accomplished and whereby it is rewarded to take energy saving measures.

This object is accomplished in that the consumption is calculated individually by a combination of a measurement of heat consumption and a measurement of comfort, wherein the measurement of heat depends on the energy emitted from the heat source, and wherein the measurement of comfort depends on the temperature of the room in question and the temperature outdoors.

The cost of the heat consumption of the property is divided into two pools that are distributed in accordance with occupation numbers from the comfort measurement and the energy measurement, respectively.

The high degree of flexibility that is accomplished by the invention resides in that the percentage distribution between the comfort measurement and the energy measurement may be varied, on the one hand in response to fixed pre-settings and in response to dynamically adjustable parameters. The fixed pre-settings may depend on the number of square meters or cubic meters of the individual flats or the insulation conditions between the flats and their relative location in the property. The dynamically adjustable parameters may comprise such parameters as sunshine hours, air velocities, time of the day and time of the year.

According to the invention it is possible to achieve an optimal distribution of the heat consumption irrespective of the various physical circumstances that a plant can be exposed to, eg if the building or property is situated in a location where it is exposed to much wind, whether it is in wind shadow, whether it is in comparatively cold or hot climatic regions, how it is constructed. A further advantage of the plant is that said calculations and optionally also the basis of the calculations can be made available to the individual consumers by transmitting the information back from the third calculator unit to the individual consumers. This can be accomplished by the units that are already present in the individual flats comprising displays for displaying information or by use of the internet. Thereby the consumer is able to continuously follow how his/her changes in the consumption of heat influences their heating bill.

The flexibility of the invention is further accentuated in that it is possible, entirely in accordance with the prevailing conditions, to use the same combination for all rooms or flats, or to use mutually different combinations, or it is an option to use a number of different combinations for respective groups of rooms or flats in the building.

The invention also relates to a plant for individually measuring heat consumption in a building comprising a number of rooms with associated heat sources. The plant is characterized in that it comprises in combination a first calculator unit configured for calculating, the amount of energy emitted from a heat source, a second calculator unit configured for calculating the temperature difference between room temperature and outdoor temperature, and a third calculator unit configured for combining the results from the first and the second calculator units.

The third calculator unit is also configured for receiving input signals from other than said first and second calculator units. For instance, it is possible to set parameter values that depend on the insulating conditions, square area and volume.

The plant may also comprise a detector for sunshine hours, an air velocity meter and a clock, whereby it is possible to also perform a dynamic change of the distribution ratio of frame measurement to comfort measurement.

By a preferred embodiment parameters and results are communicated by means of cordless communication equipment, but the invention also comprises use of conventional networks for connecting the calculator units to each other. Preferably the first calculator unit and a room temperature meter associated with the second calculator unit are arranged decentrally in the individual rooms, whereas the third calculator unit is arranged centrally in the building, and it is thus possible to transmit results from the centrally arranged calculator unit to the decentrally arranged units with the individual consumers. The invention will be explained in greater detail in the description that follows of exemplary embodiments, reference being made to the drawing, wherein
Figure 1 shows an embodiment of the invention, wherein radiators provided with respective radiator meters are used;
Figure 2 shows the same as Figure 1, but wherein the radiator meters are replaced by heat energy meters;
Figure 3 shows the same as explained above, but wherein the heat source is gas;
Figure 4 shows the same as explained above, but wherein the heat energy source is electricity;
Figure 5 is an explanatory sketch of distribution of heat measurement and comfort measurement according to the invention; whereas
Figure 6 shows a more elaborate embodiment of the invention.

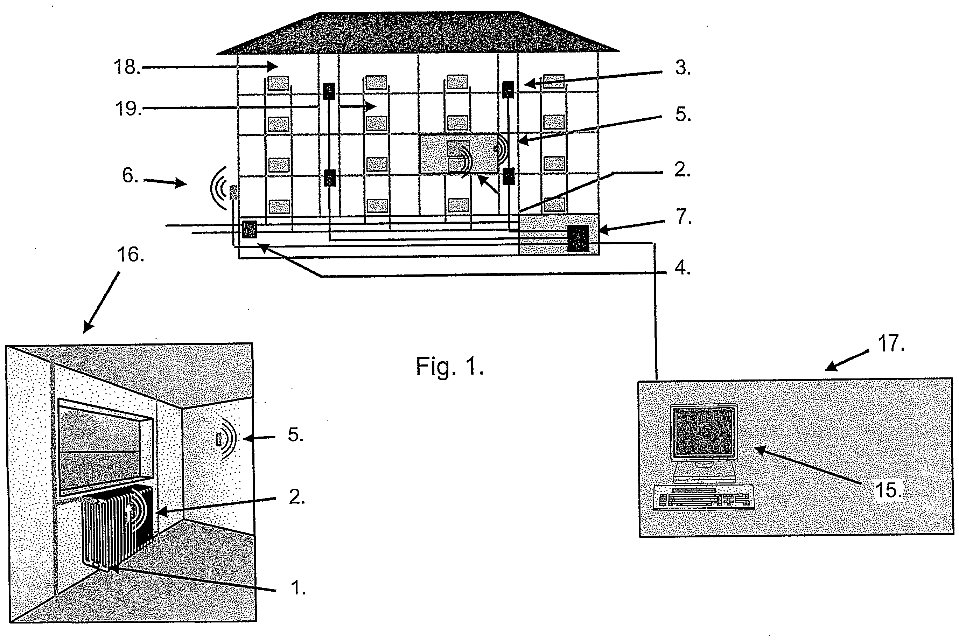

Figure 1 shows a block of flats comprising 16 leases. The heat supply to each flat is accomplished by means of a central heating system with radiators 1 in each single room. On each radiator a heat meter 2 is mounted that measures in a manner known per se (eg as described in WO 97/22863) the emission of heat from the radiator and transmits the measurement result to a radio receiver 3. A heat energy meter 4 measures the overall energy consumption of the property. The measurement result which is decisive to the cost to be distributed amongst the individual consumers is transmitted by the meter 4 to a radio receiver 3.

In each room (alternatively each flat) a room temperature meter 5 is arranged that transmits information about the measured temperature to a radio receiver 3. Outside the building-protected against radiant heat from the sun - an outdoor temperature meter 6 is arranged that transmits information about the measured temperature to radio receiver 3.

All information received by the radio receivers 3 is transmitted on to a controller box 7, where occupation numbers for both heat energy distribution and the, occupation number of the comfort measurement are calculated.

The cordless data communication is very flexible, but it may be completely or partially replaced by communication by cord. The principle of the invention is independent of how the requisite data are communicated.

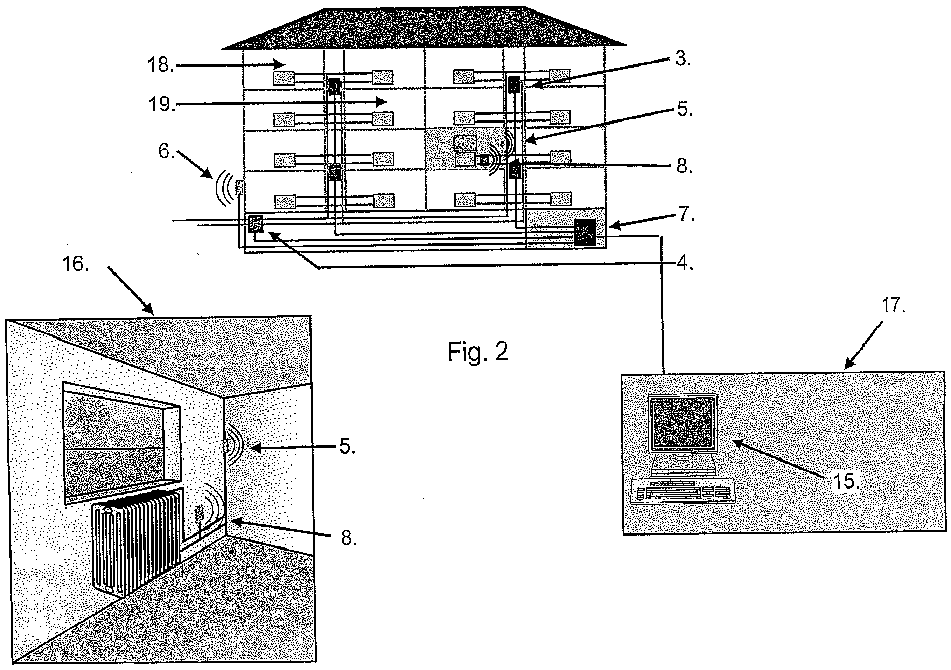

In principle, Figure 2 shows the same as Figure 1. The difference is that the heat meters on each individual radiator have been replaced by one heat energy meter 8 that measures the entire heat consumption of the consumer unit (the flat). This can be accomplished eg by measurement of the inlet and outlet temperatures and the flow through the radiator. The measurement result is transmitted to a radio receiver 3. A heat energy meter 4 measures the overall energy consumption of the property. The comfort measurement functions in the same manner as described in connection with Figure 1.

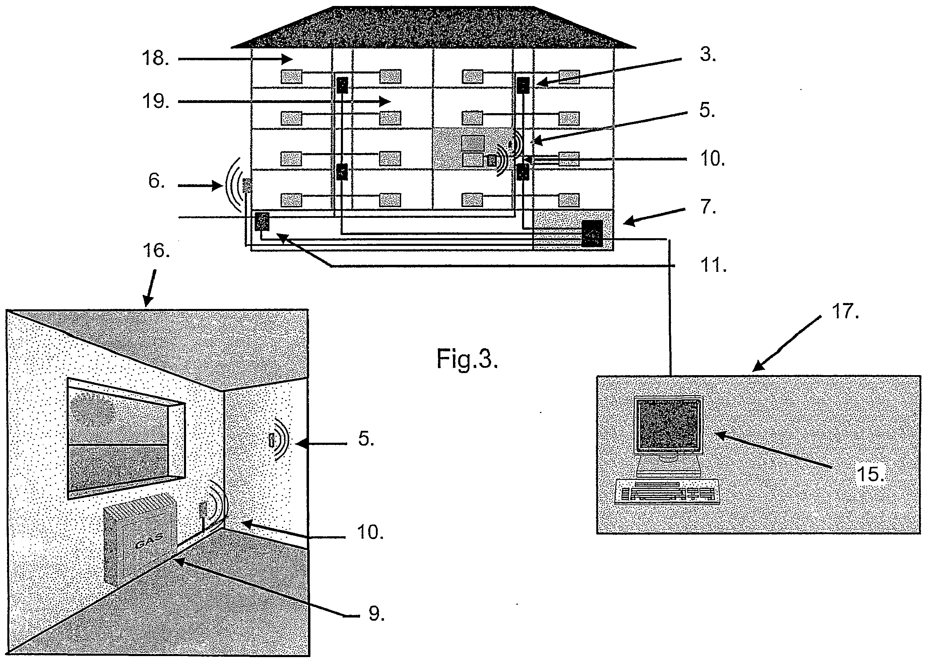

In principle, Figure 3 shows the same as Figure 2. The difference is that the heating is accomplished by means a gas heater in each consumer unit 9, and consequently the heat energy meter 8 is replaced by one gas meter 10 that measures the overall gas consumption of the consumer unit (the flat). The measurement result is transmitted to a radio receiver 3. The heat energy meter is replaced by a main gas meter 11, whose measurement result is transmitted to a radio receiver 3. The comfort measurement functions in the same manner as described in connection with Figure 1.

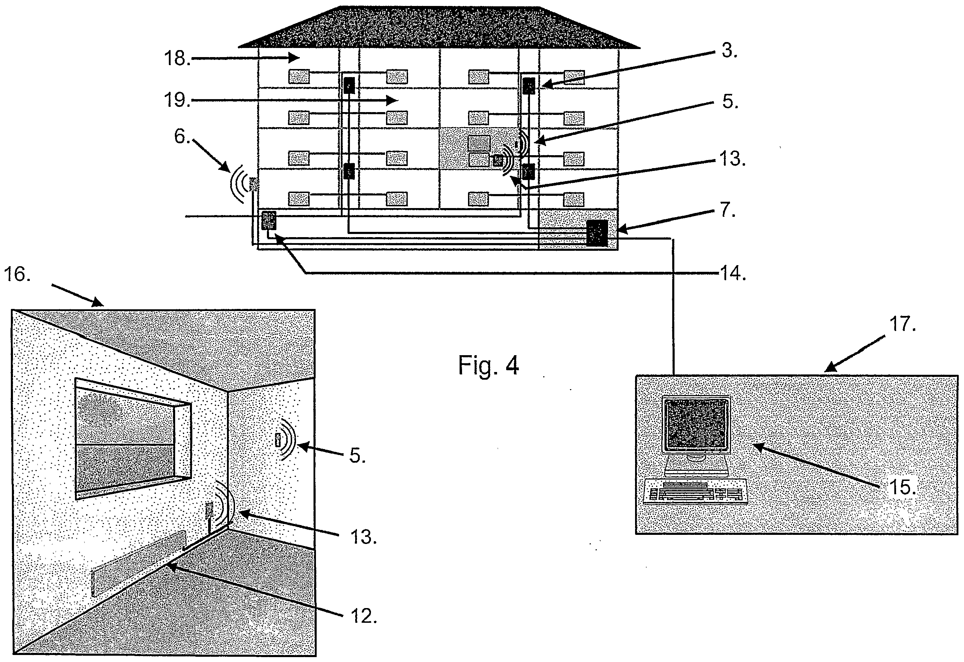

In principle, Figure 4 shows the same as Figure 2. The difference is that the heating is accomplished by means of electric radiators 12, and it follows that the heat meter 8 is replaced by an electricity meter 13 that measures the overall electricity consumption of the consumer unit (the flat). The measurement result is transmitted to a radio receiver 3. The heat energy meter is replaced by a main electricity meter 14, whose measurement result is transmitted to a radio receiver 3. The comfort measurement functions in the same manner as described in connection with Figure 1.

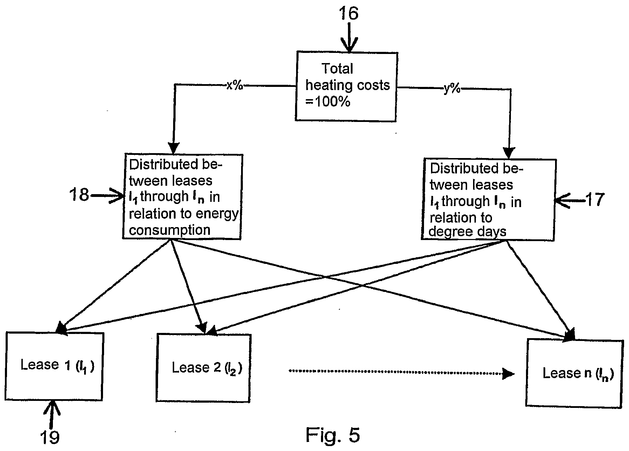

Figure 5 shows the distribution of costs in accordance with the invention between all consumer units 19. Initially the overall cost 16 is distributed into a pool of x percent that is distributed 18 on the basis of the energy consumption in each individual consumer unit and y percent that is distributed 19 in accordance with comfort units. The sum of x and y will usually be 100%, but it may also be less if a portion of the overall costs is distributed in accordance with other distribution numbers, such as eg the volume of the consumer unit or its area.

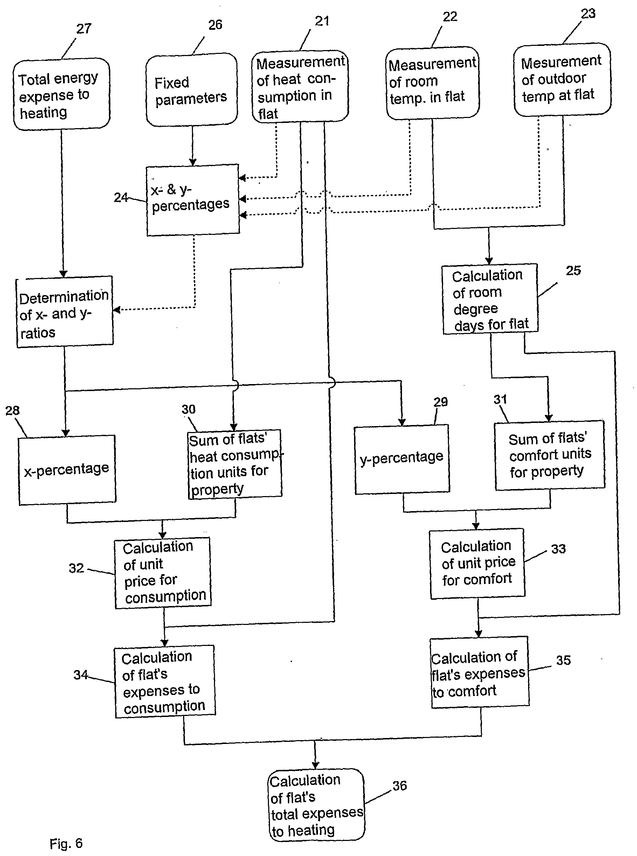

Figure 6 shows further details of how the principle explained in connection with Figure 5 can be used to advantage in practice.

y 21 it is designated that the heat consumption is measured in the individual flat, ie that the energy consumption is calculated deriving from any energy source, see examples shown in Figures 1-4.

22 symbolizes a measurement of the room temperature, be it in the individual flat or the individual room, and 23 designates a measurement of the temperature outdoors. The measurements according to 22 and 23 may be used in combination for calculating the number of room degree days, see 25, and according to the invention these measurements are used in combination with the measurement 21 to determine X and Y percentages, see 24. These percentages correspond to what was explained above in connection with Figure 5.

It is noted that figure 6 shows an embodiment in which identical X and Y values are used for all rooms/flats in the building.

Figure 6 shows that it is possible to load fixed parameters 26 to the calculator unit 24, wherein the fixed parameters may consist of information about the insulation conditions, square area or volume of the individual flats. The X and Y percentages form the basis of the determination of how large a portion of the property's total expenses to energy that is to be calculated on the basis of heat consumption and how large a part that is to be calculated on the basis of comfort measurement. The total energy cost of heating is achieved from a central meter 27, such that, by 28 and 29, it is designated eg how many DKK of the total cost of energy is to be distributed on the basis of the X percentage and how large a portion that is to be calculated on the basis of the Y percentage, respectively. The heat consumption of all flats/rooms and room degree days are added as shown by 30 and 31, respectively, such that by 32 and 33, respectively, it is possible to find a unit price for consumption and a unit price for comfort, respectively. When these unit prices are multiplied by the measurement of the individual heat consumption and the individual degree days, the expenses of each individual flat to consumption and comfort, respectively, is calculated as shown by 34 and 35, respectively. Then the overall cost of heating can be calculated for the individual flat as shown by 34 and 35, respectively. Then the overall cost of heating can be calculated for the individual flat as shown by 36.

As a further embodiment of the invention it is also an option to base the calculation on finding an X and a Y value that are specific to each single room/flat. A further embodiment may include that a number of groups of rooms/flats have respective values for X and Y.

The individual cost of heating and one or more of the above-mentioned intermediate computations can be communicated to the individual consumers, eg via the communications network shown in Figure 6, in that eg the unit 21 that calculates the heat consumption in the flat is provided with a display that is able to display such information. All of the above information can be provided by means of cord connections or by means of cordless connections, see Figures 1-4.

Thus, it is possible for the consumers to accurately monitor how their consumption habits influence the heat bill. According to the invention it is now possible to influence the consumer's habits to the dual effect that a fair distribution of the heat expenses is obtained and an incentive is produced to save energy. By means of particular data programs it is possible for the consumer, via the information provided by the internet, to use his/her computer to achieve a less expensive heat bill without adversely affecting the overall energy consumption.

The results can also greatly advantageously be used centrally, eg by a janitor. If the janitor discovers eg that in a room much energy is used despite the fact that the room temperature is not very elevated, it may be a sign that a window is broken. If the energy consumption in the room becomes very low and the room temperature drops only moderately, it may be a sign that something is wrong with a radiator valve that turns off the heat supply.

X and Y may be selected to be different for different periods of time. During the summer period, when there is no indispensable need for heating, it may be desirable to distribute the overall cost in relation to the energy consumption. This may be a requirement, in particular in case of gas and electric heating as described in connection with Figures 3 and 4, since electricity is also used for cooking and illumination, and gas is used for cooking. During the heating season this consumption will contribute to the heating of the flat. Outside the heating season it would be fair that each individual consumer pays the overall cost of his/her own energy consumption.

Choice of X and Y in the heating season may be determined of the adequacy of the heat insulation between the consumer units. If the insulation is poor, a high Y value is selected.

The method and the plant according to the invention are thus extremely flexible, both with regard to heat energy source and as to how the building is configured and situated. Then it is possible to take all circumstances into account merely by changing how the X and the Y percentage is calculated, statically and/or dynamically.

## Claims

1. A method of individually distributing the costs of heating rooms in a building that comprises a number of consumer units having rooms with an associated heat source (1), **characterized in that**
• the overall individual cost of the heat consumption between all consumer units (19) is distributed into a portion of x percent that is distributed (18: 34) between consumer units in accordance with a heat energy consumption measurement (21) in each individual consumer unit (19) and a portion of y percent that is distributed (17;35) between consumer units in accordance with a comfort measurement (25);
• wherein the heat energy consumption measurement (21) of each individual room (19) depends on the energy emitted from said heat source;
• wherein the comfort measurement (25) depends on the difference between a room temperature measurement (22) in each individual consumer unit and an outdoor temperature measurement (23); and
• wherein the sum of x and y is less than or equal to 100 percent.

2. A method according to claim 1, **characterized in that** the portions x and y are fixed pre-settings.

3. A method according to claim 2, **characterized in that** the portions x and y depend on dynamically adjustable parameters.

4. A method according to claims 1-3, **characterized in that** the portions x and y are similar for at least most rooms.

5. A method according to claims 1-4, **characterized in that** the portions x and y are dissimilar for at least some rooms.

6. A method according to claim 3 or claims 4-5 in combination with claim 3, **characterized in that** the dynamically adjustable parameters are selected as one from among the following parameters:
- sunshine hours;
- air velocity;
- time of the day;
- time of the year.

7. A method according to claims 1-6, **characterized in that** the volume and the basis of the individual heat consumption is communicated to the respective consumers.

8. A method according to claim 7, **characterized in that** the information is communicated via the internet.

9. A plant for individually distributing the costs of heating rooms (19) in a building comprising a number of consumer units having rooms with associated heat sources (1), **characterized in that** the plant comprises in combination
• a first calculator unit (21) configured for calculating the amount of energy emitted from a heat source in each individual consumer unit;
• a second calculator unit (22; 23) configured for calculating the difference in temperature between a room temperature (22) in each individual consumer unit and the outdoor temperature (23);
• a third calculator unit (24) configured for combing the calculations from the first and the second calculator units (21, 22, 23; and
• the plant configured for calculating individual heating costs by dividing the total cost (16: 27) of the heat consumption into a portion of x percent that is distributed (18: 34) between consumer units in accordance with the amount of energy emitted from a heat source in each individual consumer unit and a portion of y percent that is distributed (17: 35) between consumer units in accordance with said calculated difference in temperature, wherein the sum of x and y is less than or equal to 100 percent.

10. A plant according to claim 9, **characterized in that** the third calculator unit (24) is configured for receiving information on fixed building parameters, such as
- insulation conditions;
- square area;
- volume.

11. A plant according to claims 9 or 10, **characterized in that** the third calculator unit (24) is configured for receiving further information about one or more of the following variable parameters
- sunshine hours;
- air velocity;
- time of the day;
- time of the year.

12. A plant according to claims 9-11, **characterized in that** said calculator units (21, 22, 23, 24) comprise transmission equipment for cordless data communication.

13. A plant according to claims 9-12, **characterized in that** the first calculator unit (21) and a room temperature meter associated with the second calculator unit (22; 23) are arranged decentrally in the individual rooms, while the third calculator unit (24) is arranged centrally in the building.

14. A plant according to claim 13, **characterized in that** at least some of the decentrally arranged units comprise a display configured for displaying results from the the third calculator unit.(24).

## Patentansprüche

1. Verfahren zur individuellen Verteilung der Kosten für die Beheizung von Räumen in einem Gebäude, das eine Reihe von Verbrauchereinheiten mit Räumen mit einer zugehörigen Wärmequelle (1) umfasst, **dadurch gekennzeichnet, dass**
- die gesamten individuellen Kosten des Wärmeverbrauchs zwischen allen Verbrauchereinheiten (19) auf einen Anteil von x Prozent, der zwischen Verbrauchereinheiten in Übereinstimmung mit einer Wärmeenergieverbrauchsmessung (21) in jeder individuellen Verbrauchereinheit (19) verteilt (18; 34) wird, und einen Anteil von y Prozent verteilt werden, der zwischen Verbrauchereinheiten in Übereinstimmung mit einer Komfortmessung (25) verteilt (17; 35) wird;
- wobei die Wärmeenergieverbrauchsmessung (21) eines jeden individuellen Raums (19) von der Energie abhängig ist, die von der Wärmequelle abgestrahlt wird;
- wobei die Komfortmessung (25) von der Differenz zwischen einer Raumtemperaturmessung (22) in jeder individuellen Verbrauchereinheit und einer Außentemperaturmessung (23) abhängig ist; und
wobei die Summe von x und y geringer oder gleich 100 Prozent ist.

2. Verfahren nach Anspruch 1, **dadurch gekennzeichnet, dass** die Anteile x und y fixierte Voreinstellungen sind.

3. Verfahren nach Anspruch 2, **dadurch gekennzeichnet, dass** die Anteile x und y von dynamisch einstellbaren Parametern abhängig sind.

4. Verfahren nach den Ansprüchen 1-3, **dadurch gekennzeichnet, dass** die Anteile x und y für zumindest die meisten Räume ähnlich sind.

5. Verfahren nach den Ansprüchen 1-4, **dadurch gekennzeichnet, dass** die Anteile x und y für zumindest einige Räume nicht ähnlich sind.

6. Verfahren nach Anspruch 3 oder den Ansprüchen 4-5 in Kombination mit Anspruch 3, **dadurch gekennzeichnet, dass** die dynamisch einstellbaren Parameter als einer der folgenden Parameter ausgewählt sind:
- Sonnenstunden;
- Luftgeschwindigkeit;
- Tageszeit;
- Jahreszeit.

7. Verfahren nach den Ansprüchen 1-6, **dadurch gekennzeichnet, dass** das Volumen und die Basis des individuellen Wärmeverbrauchs an die jeweiligen Verbraucher kommuniziert werden.

8. Verfahren nach Anspruch 7, **dadurch gekennzeichnet, dass** die Information über das Internet kommuniziert wird.

9. Anlage zur individuellen Verteilung der Kosten für die Beheizung von Räumen (19) in einem Gebäude, das eine Reihe von Verbrauchereinheiten mit Räumen mit zugehörigen Wärmequellen (1) umfasst, **dadurch gekennzeichnet, dass** die Anlage in Kombination umfasst:
- eine erste Berechnungseinheit (21), die dazu ausgestaltet ist, die Menge an Energie zu berechnen, die von einer Wärmequelle in jeder individuellen Verbrauchereinheit abgestrahlt wird;
- eine zweite Berechnungseinheit (22; 23), die dazu ausgestaltet ist, die Differenz in der Temperatur zwischen einer Raumtemperatur (22) in jeder individuellen Verbrauchereinheit und der Außentemperatur (23) zu berechnen;
- eine dritte Berechnungseinheit (24), die dazu ausgestaltet ist, die Berechnungen der ersten und der zweiten Berechnungseinheit (21, 22, 23) zu kombinieren; und
- wobei die Anlage dazu ausgestaltet ist, die individuellen Heizkosten zu berechnen, indem die Gesamtkosten (16; 27) des Wärmeverbrauchs in einen Anteil von x Prozent dividiert wird, der zwischen Verbrauchereinheiten in Übereinstimmung mit der Menge an Energie, die von einer Wärmequelle in jeder individuellen Verbrauchereinheit abgestrahlt wird, verteilt (18; 34) wird, und einen Anteil von y Prozent, der zwischen Verbrauchereinheiten in Übereinstimmung mit der berechneten Temperaturdifferenz verteilt (17; 35) wird, wobei die Summe von x und y geringer oder gleich 100 Prozent ist.

10. Anlage nach Anspruch 9, **dadurch gekennzeichnet, dass** die dritte Berechnungseinheit dazu ausgestaltet ist, Informationen über festgelegte Gebäudeparameter zu erhalten, darunter etwa
- Isolierungsbedingungen;
- Fläche;
- Volumen.

11. Anlage nach den Ansprüchen 9 oder 10, **dadurch gekennzeichnet, dass** die dritte Berechnungseinheit (24) dazu ausgestaltet ist, ferner Informationen über einen oder mehrere der folgenden variablen Parameter zu erhalten:
- Sonnenstunden;
- Luftgeschwindigkeit;
- Tageszeit;
- Jahreszeit.

12. Anlage nach den Ansprüchen 9-11, **dadurch gekennzeichnet, dass** die Berechnungseinheiten (21, 22, 23, 24) Ausrüstung zur Übertragung zum Zweck der kabellosen Datenkommunikation umfassen.

13. Anlage nach den Ansprüchen 9-12, **dadurch gekennzeichnet, dass** die erste Berechnungseinheit (21) und ein Raumtemperaturmessgerät, das der zweiten Berechnungseinheit (22; 23) zugeordnet ist, dezentral in den individuellen Räumen angeordnet sind, während die dritte Berechnungseinheit (24) zentral in dem Gebäude angeordnet ist.

14. Anlage nach Anspruch 13, **dadurch gekennzeichnet, dass** zumindest einige der dezentral angeordneten Einheiten eine Anzeige umfassen, die dazu ausgestaltet ist, Ergebnisse von der dritten Berechnungseinheit (24) anzuzeigen.

## Revendications

1. Procédé de répartition individuelle des coûts de chauffage de pièces dans un bâtiment qui comprend un nombre d'unités de consommation ayant des pièces avec une source de chaleur associée (1), **caractérisé en ce que**
• le coût individuel global de la consommation de chaleur entre toutes les unités de consommation (19) est réparti en une partie de x pour cent qui est répartie (18 : 34) entre des unités de consommation conformément à une mesure de consommation d'énergie thermique (21) dans chaque unité de consommation individuelle (19) et une partie de y pour cent qui est répartie (17 ; 35) entre des unités de consommation conformément à une mesure de confort (25) ;
• dans lequel la mesure de consommation d'énergie thermique (21) de chaque pièce individuelle (19) dépend de l'énergie émise par ladite source de chaleur ;
• dans lequel la mesure de confort (25) dépend de la différence entre une mesure de température de pièce (22) dans chaque unité de consommation individuelle et une mesure de température extérieure (23) ; et
• dans lequel la somme de x et de y est inférieure ou égale à 100 pour cent.

2. Procédé selon la revendication 1, **caractérisé en ce que** les parties x et y sont des pré-réglages fixes.

3. Procédé selon la revendication 2, **caractérisé en ce que** les parties x et y dépendent de paramètres dynamiquement réglables.

4. Procédé selon les revendications 1 à 3, **caractérisé en ce que** les parties x et y sont similaires pour au moins la plupart des pièces.

5. Procédé selon les revendications 1 à 4, **caractérisé en ce que** les parties x et y sont différentes pour au moins certaines pièces.

6. Procédé selon la revendication 3 ou les revendications 4 et 5 en combinaison avec la revendication 3,
**caractérisé en ce que** les paramètres dynamiquement réglables sont sélectionnés comme l'un parmi les paramètres suivants :
- les heures d'ensoleillement ;
- la vitesse de l'air ;
- le moment de la journée ;
- le moment de l'année.

7. Procédé selon les revendications 1 à 6, **caractérisé en ce que** le volume et la base de la consommation de chaleur individuelle sont communiqués aux consommateurs respectifs.

8. Procédé selon la revendication 7, **caractérisé en ce que** les informations sont communiquées par Internet.

9. Installation pour répartir individuellement les coûts de chauffage de pièces (19) dans un bâtiment comprenant un nombre d'unités de consommation ayant des pièces avec des sources de chaleur associées (1), **caractérisée en ce que** l'installation comprend en combinaison
• une première unité de calcul (21) configurée pour calculer la quantité d'énergie émise par une source de chaleur dans chaque unité de consommation individuelle ;
• une deuxième unité de calcul (22 ; 23) configurée pour calculer la différence de température entre une température de pièce (22) dans chaque unité de consommation individuelle et la température extérieure (23) ;
• une troisième unité de calcul (24) configurée pour combiner les calculs provenant des première et deuxième unités de calcul (21, 22, 23) ; et
• l'installation configurée pour calculer des coûts de chauffage individuels en divisant le coût total (16 : 27) de la consommation de chaleur en une partie de x pour cent qui est répartie (18 : 34) entre des unités de consommation conformément à la quantité d'énergie émise par une source de chaleur dans chaque unité de consommation individuelle et une partie de y pour cent qui est répartie (17 : 35) entre des unités de consommation conformément à ladite différence de température calculée, où la somme de x et de y est inférieure ou égale à 100 pour cent.

10. Installation selon la revendication 9, **caractérisée en ce que** la troisième unité de calcul (24) est configurée pour recevoir des informations sur des paramètres fixes du bâtiment, tels que
- les conditions d'isolation ;
- la surface carrée ;
- le volume.

11. Installation selon la revendication 9 ou 10, **caractérisée en ce que** la troisième unité de calcul (24) est configurée pour recevoir des informations supplémentaires sur un ou plusieurs des paramètres variables suivants
- les heures d'ensoleillement ;
- la vitesse de l'air ;
- le moment de la journée ;
- le moment de l'année.

12. Installation selon les revendications 9 à 11, **caractérisée en ce que** lesdites unités de calcul (21, 22, 23, 24) comprennent un équipement de transmission pour une communication de données sans fil.

13. Installation selon les revendications 9 à 12, **caractérisée en ce que** la première unité de calcul (21) et un thermomètre de pièce associé à la deuxième unité de calcul (22 ; 23) sont agencés de manière décentrée dans les pièces individuelles, tandis que la troisième unité de calcul (24) est agencée au centre du bâtiment.

14. Installation selon la revendication 13, **caractérisée en ce qu'**au moins certaines des unités agencées de manière décentrée comprennent un dispositif d'affichage configuré pour afficher des résultats provenant de la troisième unité de calcul (24).
